# EUROPEAN PATENT APPLICATION

(11) **EP 4 786 215 A1**
(43) Date of publication of application: **05.08.2026**
(21) Application number: 25154875.6
(22) Date of filing: 30.01.2025
(51) Int. Cl.: B60G 17/016, B60G 17/0195

(54) **CONTROLLING LIFT AXLE CONFIGURATION OF A VEHICLE**

(71) Applicant: Volvo Truck Corporation, 405 08 Göteborg (SE)
(72) Inventor: TRAVAGLIA, Carlos Abilio, 82200-300 CURITIBA (BR); ZARPELON, Fernando Luis, 81210-310 CURITIBA (BR)
(74) Representative: Kransell & Wennborg KB

(57) **Abstract**

A computer system (19) comprising processing circuitry (21) configured to: receive an indication (23) that, for a vehicle (1) having, in order from front to rear, a first axle (3) with a first set (11) of wheels, a liftable second axle (5) with a second set (13) of wheels, a third drive axle (7) with a third set (15) of wheels, and a liftable fourth axle (9) with a fourth set (17) of wheels, the load (L) carried by the vehicle (1) is lower than a predefined first load (La) defining an unladen state; receive an indication (25) that braking capability using the first set (11) of wheels is reduced; acquire a stored predefined axle lift configuration (26) for maximum deceleration in the unladen state with reduced braking capability; and provide an axle lift command (27) encoding the predefined configuration in response to the received indications.

## Description

### TECHNICAL FIELD

The disclosure relates generally to controlling vehicle control. In particular aspects, the disclosure relates to controlling a lift axle configuration of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In a vehicle with liftable axles, the axle lift configuration of the vehicle may influence the operational characteristics of the vehicle, such as the braking performance and/or the energy efficiency of the vehicle. Tire wear may also be influenced.

It would be desirable to provide for axle lift configurations suitable for different vehicle states, such as for different loads carried by the vehicle.

### SUMMARY

According to a first aspect of the disclosure, there is provided a computer system comprising processing circuitry configured to: receive an indication, for a vehicle having, in order from front to rear of the vehicle, a first axle with a first set of wheels, a liftable second axle with a second set of wheels, a third axle with a third set of wheels, the third axle being a drive axle, and a liftable fourth axle with a fourth set of wheels, that a load carried by the vehicle is lower than a predefined first load defining an unladen state of the vehicle; receive an indication that a capability to brake the vehicle using the first set of wheels is reduced; acquire a stored predefined axle lift configuration known to enable maximum deceleration of the vehicle when the vehicle is in the unladen state and the capability to brake the vehicle using the first set of wheels is reduced; and provide, in response to the indication that the load carried by the vehicle is lower than the predefined first load and the indication that the capability to brake the vehicle using the first set of wheels is reduced, an axle lift command encoding the predefined axle lift configuration. The first aspect of the disclosure may seek to provide for optimum braking performance in the particularly challenging scenario of an unladen vehicle with front brake failure. A technical benefit may include that each vehicle configuration can be provided with its own predefined axle lift configuration that is known to enable maximum braking performance in the event of front brake failure, and that this predefined axle lift configuration can be realized in the event that front brake failure is detected, and the vehicle is unladen. Hereby, an improved braking performance can be provided for in one of the most challenging scenarios for this type of vehicle (unladen vehicle and front brake failure), providing for a reduced stopping distance. This, in turn, provides for improved safety.

Optionally in some examples, including in at least one preferred example, the processing circuitry may be configured to acquire the stored predefined axle lift configuration in response to an indication that the capability to brake the vehicle using the first set of wheels is reduced. This configuration may provide the technical benefit of enabling optimized braking performance by implementing an axle lift configuration known to enhance deceleration. In particular, this benefit is significant when the vehicle is unladen and the braking capability of the front wheels is compromised, reducing stopping distance and improving overall vehicle safety. The indication that the capability to brake the vehicle using the first set of wheels is reduced may include, for example, a detected low air pressure in the braking system, wherein the air pressure is below a predefined threshold necessary for effective braking performance.

Optionally in some examples, including in at least one preferred example, the processing circuitry may be further configured to disregard, in response to an indication that the load carried by the vehicle is lower than a predefined first load, any axle lift configuration request from a driver of the vehicle. This may provide the technical benefit of ensuring that axle lift configurations remain optimized for the vehicle's operational state, such as when the vehicle is unladen, thereby improving safety, stability, and braking performance.

Optionally in some examples, including in at least one preferred example, the indication that the capability to brake the vehicle using the first set of wheels is reduced may include an indication that a front braking sub-system, which is controllable to brake at least the first set of wheels, is faulty. This may provide the technical benefit of enabling timely detection and response to braking system malfunctions, ensuring that axle lift configurations are adjusted to maintain optimal braking performance and vehicle safety.

Optionally in some examples, including in at least one preferred example, the processing circuitry may be further configured to: receive an indication that the load carried by the vehicle is lower than a predefined first load; and provide, in response to this indication and in the absence of an indication that the capability to brake the vehicle using the first set of wheels is reduced, an axle lift command encoding an axle lift configuration where both the second axle and the fourth axle are lifted. This may provide the technical benefit of improving energy efficiency and reducing tire wear during unladen operation while providing for improved braking performance of the unladen vehicle.

Optionally in some examples, including in at least one preferred example, the processing circuitry may be further configured to: receive an indication that the load carried by the vehicle is higher than a predefined first load and lower than a predefined second load; receive an axle lift configuration request from a driver of the vehicle; and provide, in response to the load indication and the driver's axle lift configuration request, an axle lift command encoding an axle lift configuration that fulfills the driver's request. This may provide the technical benefit of allowing driver-specific axle lift preferences to be implemented when the vehicle operates within an intermediate load range, enhancing operational flexibility while maintaining stability and performance. The intermediate load range may be defined as the load condition where the vehicle's load is greater than the unladen threshold but less than the maximum technical load, as determined by the manufacturer. Within this range, the driver may be able to actively select axle lift configurations using lifter buttons on the vehicle panel. This flexibility may allow for optimized axle load management depending on the operational requirements, while ensuring safety and load distribution remain within permissible limits.

Optionally in some examples, including in at least one preferred example, the processing circuitry may be further configured to: receive an indication that the load carried by the vehicle is higher than the predefined second load; and provide, in response to this indication, an axle lift command encoding an axle lift configuration where both the second axle and the fourth axle are unlifted. This may provide the technical benefit of ensuring maximum load-bearing capacity and stability when the vehicle operates under high-load conditions, thereby preventing overloading of specific axles and enhancing safety.

Optionally in some examples, including in at least one preferred example, the processing circuitry may be further configured to disregard, in response to an indication that the load carried by the vehicle is higher than the predefined second load, any axle lift configuration request from the driver of the vehicle. This may ensure that axle lift operations are restricted in high-load conditions, preventing unintended axle configurations that could compromise vehicle performance or exceed axle load limits.

Optionally in some examples, including in at least one preferred example, the computer system according to examples of the first aspect may be included in a lift axle arrangement, further comprising a first axle lift actuator coupled to the processing circuitry of the computer system to receive a control signal for lifting the second axle, and a second axle lift actuator coupled to the processing circuitry of the computer system to receive a control signal for lifting the fourth axle.

Optionally in some examples, including in at least one preferred example, the lift axle arrangement according to examples of the preceding aspect may be comprised in a vehicle, further comprising, in order from front to rear, a first axle with a first set of wheels, a liftable second axle with a second set of wheels, a third axle with a third set of wheels, the third axle being a drive axle, and a liftable fourth axle with a fourth set of wheels. The first axle lift actuator of the lift axle arrangement may be coupled to the second axle, and the second axle lift actuator of the lift axle arrangement may be coupled to the fourth axle.

According to a second aspect of the disclosure, there is provided a computer-implemented method, comprising receiving an indication, for a vehicle having, in order from front to rear of the vehicle, a first axle with a first set of wheels, a liftable second axle with a second set of wheels, a third axle with a third set of wheels, the third axle being a drive axle, and a liftable fourth axle with a fourth set of wheels, that a load carried by the vehicle is lower than a predefined first load defining an unladen state of the vehicle; receiving an indication that a capability to brake the vehicle using the first set of wheels is reduced; acquiring a stored predefined axle lift configuration known to enable maximum deceleration of the vehicle when the vehicle is in the unladen state and the capability to brake the vehicle using the first set of wheels is reduced; and providing, in response to the indication that the load carried by the vehicle is lower than the predefined first load and the indication that the capability to brake the vehicle using the first set of wheels is reduced, an axle lift command encoding the predefined axle lift configuration. The second aspect of the disclosure may seek to provide for optimum braking performance in the particularly challenging scenario of an unladen vehicle with front brake failure. A technical benefit may include that each vehicle configuration can be provided with its own predefined axle lift configuration that is known to enable maximum braking performance in the event of front brake failure, and that this predefined axle lift configuration can be realized in the event that front brake failure is detected, and the vehicle is unladen. Hereby, an improved braking performance can be provided for in one of the most challenging scenarios for this type of vehicle (unladen vehicle and front brake failure), providing for a reduced stopping distance. This, in turn, provides for improved safety.

Optionally in some examples, including in at least one preferred example, the method may comprise acquiring the stored predefined axle lift configuration in response to an indication that the capability to brake the vehicle using the first set of wheels is reduced. This may provide the technical benefit of enabling optimized braking performance by implementing an axle lift configuration known to enhance deceleration. In particular, this benefit is significant when the vehicle is unladen and the braking capability of the front wheels is compromised, reducing stopping distance and improving overall vehicle safety. The indication that the capability to brake the vehicle using the first set of wheels is reduced may include, for example, a detected low air pressure in the braking system, wherein the air pressure is below a predefined threshold necessary for effective braking performance.

Optionally in some examples, including in at least one preferred example, the method may further comprise disregarding, in response to an indication that the load carried by the vehicle is lower than a predefined first load, any axle lift configuration request from a driver of the vehicle. This may provide the technical benefit of ensuring that axle lift configurations remain optimized for the vehicle's operational state, such as when the vehicle is unladen, thereby improving safety, stability, and braking performance.

Optionally in some examples, including in at least one preferred example, the indication that the capability to brake the vehicle using the first set of wheels is reduced may include an indication that a front braking sub-system, which is controllable to brake at least the first set of wheels, is faulty. This may provide the technical benefit of enabling timely detection and response to braking system malfunctions, ensuring that axle lift configurations are adjusted to maintain optimal braking performance and vehicle safety.

Optionally in some examples, including in at least one preferred example, the method may further comprise: receiving an indication that the load carried by the vehicle is lower than a predefined first load; and providing, in response to this indication and in the absence of an indication that the capability to brake the vehicle using the first set of wheels is reduced, an axle lift command encoding an axle lift configuration where both the second axle and the fourth axle are lifted. This may provide the technical benefit of improving energy efficiency and reducing tire wear during unladen operation while providing for improved braking performance of the unladen vehicle.

Optionally in some examples, including in at least one preferred example, the method may further comprise: receiving an indication that the load carried by the vehicle is higher than a predefined first load and lower than a predefined second load; receiving an axle lift configuration request from a driver of the vehicle; and providing, in response to the load indication and the driver's axle lift configuration request, an axle lift command encoding an axle lift configuration that fulfills the driver's request. This may provide the technical benefit of allowing driver-specific axle lift preferences to be implemented when the vehicle operates within an intermediate load range, enhancing operational flexibility while maintaining stability and performance. The intermediate load range may be defined as the load condition where the vehicle's load is greater than the unladen threshold but less than the maximum technical load, as determined by the manufacturer. Within this range, the driver may be able to actively select axle lift configurations using lifter buttons on the vehicle panel. This flexibility may allow for optimized axle load management depending on the operational requirements, while ensuring safety and load distribution remain within permissible limits.

Optionally in some examples, including in at least one preferred example, the method may further comprise: receiving an indication that the load carried by the vehicle is higher than the predefined second load; and providing, in response to this indication, an axle lift command encoding an axle lift configuration where both the second axle and the fourth axle are unlifted. This may provide the technical benefit of ensuring maximum load-bearing capacity and stability when the vehicle operates under high-load conditions, thereby preventing overloading of specific axles and enhancing safety.

Optionally in some examples, including in at least one preferred example, the method may further comprise disregarding, in response to an indication that the load carried by the vehicle is higher than the predefined second load, any axle lift configuration request from the driver of the vehicle. This may ensure that axle lift operations are restricted in high-load conditions, preventing unintended axle configurations that could compromise vehicle performance or exceed axle load limits.

According to a third aspect of the disclosure, there is provided a computer program product comprising program code for performing, when executed by the processing circuitry, the method of the second aspect of the disclosure.

According to a fourth aspect of the disclosure, there is provided a non-transitory computer-readable storage medium comprising instructions, which when executed by the processing circuitry, cause the processing circuitry to perform the method of the second aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is an exemplary computer system according to an example.
**FIG. 3** is an exemplary lift axle arrangement according to an example.
**FIG. 4** is an exemplary method according to an example.
**FIG. 5** is an exemplary method according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

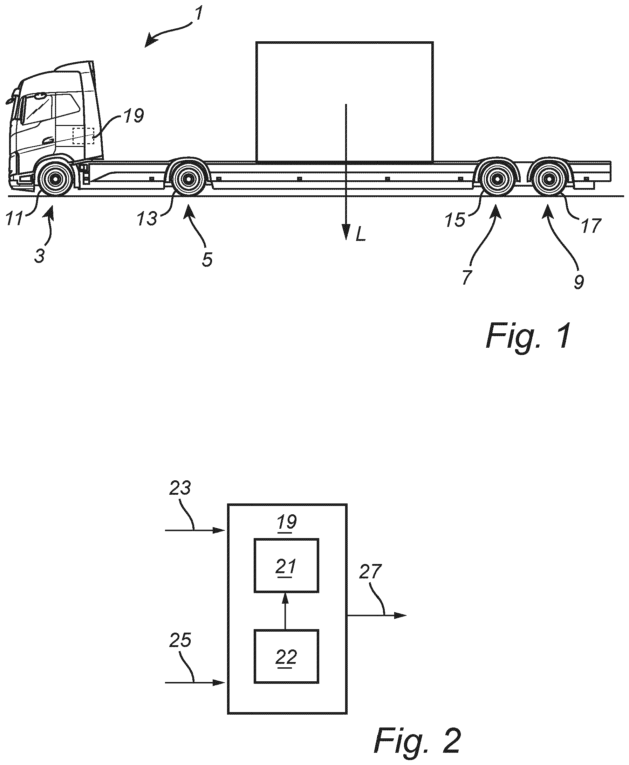

FIG. 1 illustrates an exemplary vehicle 1 according to an example. The vehicle 1 comprises, in order from the front to the rear of the vehicle 1, a first axle 3 equipped with a first set 11 of wheels, a liftable second axle 5 equipped with a second set 13 of wheels, a third axle 7 equipped with a third set 15 of wheels, the third axle 7 being a drive axle, and a liftable fourth axle 9 equipped with a fourth set 17 of wheels. The vehicle 1 further includes a computer system 19 for controlling operation of the liftable axles of the vehicle 1.

An example of a vehicle 1 may be an 8x2 truck equipped with a rear two-leaf metallic suspension and two liftable axles 5, 9. When operating in an unladen condition, the braking performance may be significantly impacted by the axle arrangement, which affects the normal load distribution among the axles. Specifically, when the liftable axles 5, 9 remain on the ground, insufficient normal load may limit the braking force, preventing the vehicle 1 from achieving desired deceleration during braking.

FIG. 2 illustrates an exemplary computer system 19 according to an example. The computer system 19 comprises processing circuitry 21 and may comprise a memory 26, such as a non-volatile memory. The processing circuitry 21 may be configured to receive an indication 23 that a load L carried by the vehicle 1 is lower than a predefined first load L₀ defining an unladen state of the vehicle 1, to receive an indication 25 that a capability to brake the vehicle 1 using the first set 11 of wheels is reduced, and to acquire from the memory 22 a stored predefined axle lift configuration 26 known to enable maximum deceleration of the vehicle 1 when the vehicle 1 is in the unladen state and the capability to brake the vehicle 1 using the first set 11 of wheels is reduced. The processing circuitry 21 may further be configured to provide, in response to the indication 23 that the load L carried by the vehicle 1 is lower than the predefined first load L₀ and the indication 25 that the capability to brake the vehicle 1 using the first set 11 of wheels is reduced, an axle lift command 27 encoding the predefined axle lift configuration 26.

The predefined axle lift configuration may be determined based on results from braking performance tests conducted to optimize deceleration under specific conditions. These tests may be used to identify the axle arrangement that provides the best possible braking performance for a given vehicle, such as the exemplary vehicle 1. The optimal axle lift configuration may vary depending on vehicle characteristics, including the height of the vehicle's center of gravity and the wheelbase. These factors influence the distribution of the normal load across the axles and, consequently, the adhesion between the tires and the road surface during braking. By accounting for such characteristics, the predefined axle lift configuration may ensure maximum deceleration, particularly when the vehicle 1 is in an unladen state and the capability to brake using the first set 11 of wheels is reduced.

The reduced capability to brake using the front brakes may affect not only the first axle 3 but also the second axle 5, depending on the configuration of the brake system. For example, in some configurations, the front braking circuit may control braking on both the first axle 3 and the liftable second axle 5, meaning a failure in this circuit could compromise braking effectiveness across both axles. Possible failure modes for an air braking system may include a loss of air pressure due to leaks in the air lines, failure of the air compressor to maintain sufficient pressure, malfunctioning brake valves, or clogging of air reservoirs. Additionally, mechanical failures, such as stuck or worn brake actuators, may also result in a reduced braking capability for one or more axles.

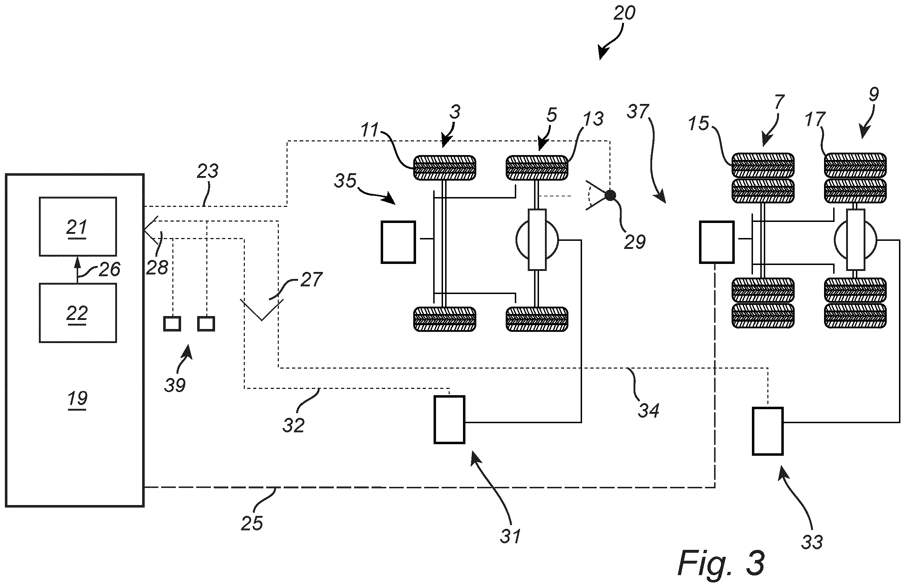

FIG. 3 illustrates an exemplary lift axle arrangement 20 according to an example. The lift axle arrangement 20 may comprise the computer system 19 described above with reference to FIG. 2, a first axle lift actuator 31, and a second axle lift actuator 33. The first axle lift actuator 31 may be coupled to the processing circuitry 21 of the computer system 19 to receive a control signal 32 for lifting the second axle 5, and the second axle lift actuator 33 may be coupled to the processing circuitry 21 of the computer system 19 to receive a control signal 34 for lifting the fourth axle 9. As is indicated in FIG. 3, the lift axle arrangement 20 may further comprise a load sensor 29 configured to provide the above-mentioned indication 23 of the load L carried by the vehicle 1. The load sensor 29 may be installed on the vehicle chassis and connected to the axle, and estimate an angle corresponding to the vertical displacement of the suspension. An electrical signal representing the estimated angle may be the indication 23 received by the processing circuitry 21 of the computer system 19. Alternative solutions for estimating the vehicle load may include pressure sensors installed in the air suspension system to measure air pressure as an indicator of load, strain gauges on the axles or suspension components to detect deformation caused by the vehicle's load, or load cells integrated into the chassis to measure weight distribution directly. The illustration in FIG. 3 also includes an exemplary front braking system 35 and an exemplary rear braking system 37. As is schematically shown in FIG. 3, the front braking system 35 is arranged and configured to brake the wheels 11 on the first axle 3 and the wheels 13 on the second axle 5, and the rear braking system 37 is arranged and configured to brake the wheels 15 on the third axle 7 and the wheels 17 on the fourth axle 9. Status information about the braking systems 35, 27 may be received by the processing circuitry 21 of the computer system 19. Specifically, the above-mentioned indication 25 that the capability to brake the vehicle 1 using the first set 11 of wheels is reduced may be received from the front braking system 35.

The processing circuitry 21 of the computer system 19 may be configured to adjust the axle lift configuration depending on the indication of the load L carried by the vehicle 1 and any axle lift configuration requests 28 from the driver. When the load L is indicated to be higher than the predefined first load L₀ (unladen state) but lower than a predefined second load Lₘₐₓ, the processing circuitry 21 may receive a driver input through driver-operable lift controls 39, such as buttons for lifting or lowering the second axle 5 and the fourth axle 9. In this intermediate load range, the processing circuitry 21 may respond to the driver's axle lift configuration request 28 by providing an axle lift command 27 encoding an axle lift configuration that fulfills the driver's axle lift configuration request, offering flexibility to manage the axle configuration. If the load L is indicated to be higher than the predefined second load Lₘₐₓ, the processing circuitry 21 may provide an axle lift command encoding an axle lift configuration where both the second axle 5 and the fourth axle 9 are unlifted, ensuring the vehicle can support the heavier load. Additionally, in this high-load condition, the processing circuitry 21 may be configured to disregard any axle lift configuration requests 28 from the driver, preventing axle configurations that could compromise stability or exceed permissible load limits.

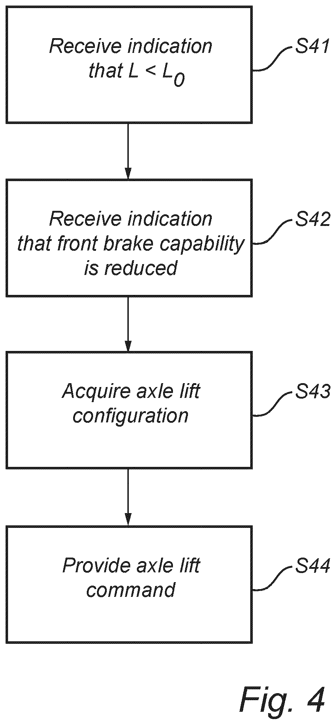

FIG. 4 illustrates an exemplary computer-implemented method according to an example. The method may comprise receiving S41 an indication 23 that, for a vehicle 1 having, in order from the front to the rear of the vehicle 1, a first axle 3 equipped with a first set 11 of wheels, a liftable second axle 5 equipped with a second set 13 of wheels, a third axle 7 equipped with a third set 15 of wheels, the third axle 7 being a drive axle, and a liftable fourth axle 9 equipped with a fourth set 17 of wheels, a load L carried by the vehicle 1 is lower than a predefined first load L₀ defining an unladen state of the vehicle 1. The method may comprise receiving S42 an indication 25 that a capability to brake the vehicle 1 using the first set 11 of wheels is reduced. The method may comprise acquiring S43 a stored predefined axle lift configuration 26 known to enable maximum deceleration of the vehicle 1 when the vehicle 1 is in the unladen state and the capability to brake the vehicle 1 using the first set 11 of wheels is reduced. Finally, the method may comprise providing, S44, in response to the indication 23 that the load L carried by the vehicle 1 is lower than the predefined first load L₀ and the indication 25 that the capability to brake the vehicle 1 using the first set 11 of wheels is reduced, an axle lift command 27 encoding the predefined axle lift configuration 26.

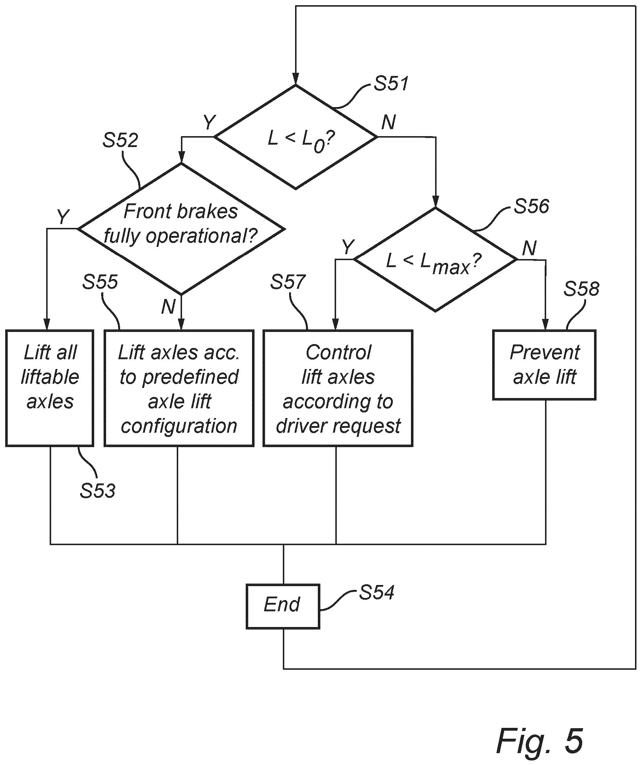

FIG. 5 illustrates an exemplary computer-implemented method according to an example. The method may comprise evaluating S51 whether or not a received indication 23 indicates that the load L carried by the vehicle 1 is lower than the predefined first load L₀ defining an unladen state of the vehicle 1. If it is determined that the load L carried by the vehicle 1 is lower than the first load L₀, i.e. that the vehicle 1 is unladen (S51, Y), and it is determined that the front brakes 35 are fully operational (S52, Y), a command may be provided to lift all liftable axles 5, 9. This will ensure adequate braking performance for all available vehicle configurations, when the vehicle 1 is in its unladen state. The method ends S54 and returns to evaluating S51 the load. If, on the other hand, it is determined that the front brakes 35 are not fully operational (S52, N), a command may be provided to lift liftable axles according to a predefined axle lift configuration 22, as described above. This will ensure the best possible braking performance for the specific vehicle configuration in the specific case of failure of the front brakes 35. The method ends S54 and returns to evaluating S51 the load. If it is determined that the load L carried by the vehicle 1 is higher than the first load L₀ (S51, N), and it is determined that the load L carried by the vehicle 1 is lower than the second load Lₘₐₓ (S56, Y), the driver may be allowed control the lift axle configuration. To that end, the processing circuitry 21 of the computer system 19 may receive control signals from driver-operable lift controls 39, and provide S57 an axle lift command 27 encoding an axle lift configuration fulfilling the axle lift configuration request 28 from the driver of the vehicle 1. The method ends S54 and returns to evaluating S51 the load. If it is instead determined that the load L carried by the vehicle 1 is higher than the second load Lₘₐₓ (S56, N), the method may comprise providing S58, in response to the indication that the load L carried by the vehicle 1 is higher than a predefined second load Lₘₐₓ, an axle lift command encoding an axle lift configuration where the second axle 5 is unlifted and the fourth axle 9 is unlifted. The method may further comprise disregarding, in response to the indication that the load L carried by the vehicle 1 is higher than the second load Lₘₐₓ, any axle lift configuration request 28 from a driver of the vehicle 1. The method ends S54 and returns to evaluating S51 the load.

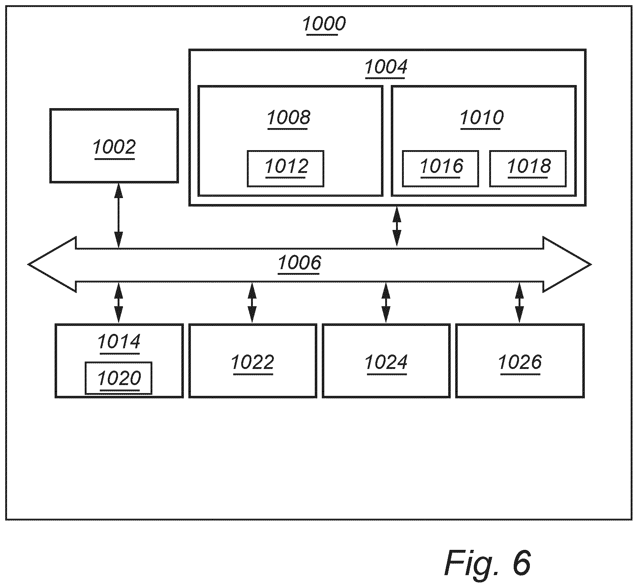

Fig. 6 is a schematic diagram of a computer system 1000 for implementing examples disclosed herein, such as for implementing examples of the computer system 19 according to examples. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet, or by direct wired or wireless communication. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or indication processing or for executing computer code stored in memory 1004. The processing circuitry 1002 may, for example, include a general-purpose processor, an application specific processor, a Digital indication Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured to: receive an indication, for a vehicle having, in order from front to rear of the vehicle, a first axle with a first set of wheels, a liftable second axle with a second set of wheels, a third axle with a third set of wheels, the third axle being a drive axle, and a liftable fourth axle with a fourth set of wheels, that a load carried by the vehicle is lower than a predefined first load defining an unladen state of the vehicle; receive an indication that a capability to brake the vehicle using the first set of wheels is reduced; acquire a stored predefined axle lift configuration known to enable maximum deceleration of the vehicle when the vehicle is in the unladen state and the capability to brake the vehicle using the first set of wheels is reduced; and provide, in response to the indication that the load carried by the vehicle is lower than the predefined first load and the indication that the capability to brake the vehicle using the first set of wheels is reduced, an axle lift command encoding the predefined axle lift configuration.

Example 2: The computer system of example 1, wherein the processing circuitry is configured to acquire the stored predefined axle lift configuration in response to the indication that the capability to brake the vehicle using the first set of wheels is reduced.

Example 3: The computer system of example 1 or 2, wherein the processing circuitry is further configured to disregard, in response to the indication that the load carried by the vehicle is lower than the first load, any axle lift configuration request from a driver of the vehicle.

Example 4: The computer system of any of examples 1-3, wherein the indication that the capability to brake the vehicle using the first set of wheels is reduced is an indication that a front braking sub-system controllable to brake at least the first set of wheels is faulty.

Example 5: The computer system of any of examples 1-4, wherein the processing circuitry is further configured to: receive an indication that the load carried by the vehicle is lower than the first load; and provide, in response to the indication that the load carried by the vehicle is lower than the predefined first load and in the absence of an indication that the capability to brake the vehicle using the first set of wheels is reduced, an axle lift command encoding an axle lift configuration where the second axle is lifted and the fourth axle is lifted.

Example 6: The computer system of any of examples 1-5, wherein the processing circuitry is further configured to: receive an indication that the load carried by the vehicle is higher than the first load and lower than a predefined second load; receive an axle lift configuration request from a driver of the vehicle; and provide, in response to the indication that the load carried by the vehicle is higher than the first load and lower than the predefined second load and the axle lift configuration request from the driver of the vehicle, an axle lift command encoding an axle lift configuration fulfilling the axle lift configuration request from the driver of the vehicle.

Example 7: The computer system of any of examples 1-6, wherein the processing circuitry is further configured to: receive an indication that the load carried by the vehicle is higher than the second load; provide, in response to the indication that the load carried by the vehicle is higher than the second load, an axle lift command encoding an axle lift configuration where the second axle is unlifted and the fourth axle is unlifted.

Example 8: The computer system of example 7, wherein the processing circuitry is further configured to disregard, in response to the indication that the load carried by the vehicle is higher than the second load, any axle lift configuration request from a driver of the vehicle.

Example 9: A lift axle arrangement comprising: the computer system of any of examples 1-8; a first axle lift actuator coupled to the processing circuitry of the computer system to receive a control signal for lifting the second axle; and a second axle lift actuator coupled to the processing circuitry of the computer system to receive a control signal for lifting the fourth axle.

Example 10: A vehicle, comprising: in order from front to rear of the vehicle, a first axle with a first set of wheels, a liftable second axle with a second set of wheels, a third axle with a third set of wheels, the third axle being a drive axle, and a liftable fourth axle with a fourth set of wheels; and the lift axle arrangement according to example 9, wherein the first axle lift actuator of the lift axle arrangement is coupled to the second axle and the second axle lift actuator of the lift axle arrangement is coupled to the fourth axle.

Example 11: A computer-implemented method, comprising: receiving an indication, for a vehicle having, in order from front to rear of the vehicle, a first axle with a first set of wheels, a liftable second axle with a second set of wheels, a third axle with a third set of wheels, the third axle being a drive axle, and a liftable fourth axle with a fourth set of wheels, that a load carried by the vehicle is lower than a predefined first load defining an unladen state of the vehicle; receiving an indication that a capability to brake the vehicle using the first set of wheels is reduced; acquiring a stored predefined axle lift configuration known to enable maximum deceleration of the vehicle when the vehicle is in the unladen state and the capability to brake the vehicle using the first set of wheels is reduced; and providing, in response to the indication that the load carried by the vehicle is lower than the predefined first load and the indication that the capability to brake the vehicle using the first set of wheels is reduced, an axle lift command encoding the predefined axle lift configuration.

Example 12: The method of example 11, wherein the method comprises acquiring the stored predefined axle lift configuration in response to the indication that the capability to brake the vehicle using the first set of wheels is reduced.

Example 13: The method of example 11 or 12, wherein the method further comprises disregarding, in response to the indication that the load carried by the vehicle is lower than the first load, any axle lift configuration request from a driver of the vehicle.

Example 14: The method of any of examples 11-13, wherein the indication that the capability to brake the vehicle using the first set of wheels is reduced is an indication that a front braking sub-system controllable to brake at least the first set of wheels is faulty.

Example 15: The method of any of examples 11-14, wherein the method further comprises: receiving an indication that the load carried by the vehicle is lower than the first load; and providing, in response to the indication that the load carried by the vehicle is lower than the predefined first load and in the absence of an indication that the capability to brake the vehicle using the first set of wheels is reduced, an axle lift command encoding an axle lift configuration where the second axle is lifted and the fourth axle is lifted.

Example 16: The method of any of examples 11-15, wherein the method further comprises: receiving an indication that the load carried by the vehicle is higher than the first load and lower than a predefined second load; receiving an axle lift configuration request from a driver of the vehicle; and providing, in response to the indication that the load carried by the vehicle is higher than the first load and lower than the predefined second load and the axle lift configuration request from the driver of the vehicle, an axle lift command encoding an axle lift configuration fulfilling the axle lift configuration request from the driver of the vehicle.

Example 17: The method of any of examples 11-16, wherein the method further comprises: receiving an indication that the load carried by the vehicle is higher than the second load; providing, in response to the indication that the load carried by the vehicle is higher than the second load, an axle lift command encoding an axle lift configuration where the second axle is unlifted and the fourth axle is unlifted.

Example 18: The method of example 17, wherein the method further comprises disregarding, in response to the indication that the load carried by the vehicle is higher than the second load, any axle lift configuration request from a driver of the vehicle.

Example 19: A computer program product comprising program code for performing, when executed by the processing circuitry comprised in the computer system of any of examples 1-8, the method of any of examples 11-18.

Example 20: A non-transitory computer-readable storage medium comprising instructions, which when executed by the processing circuitry comprised in the computer system of any of examples 1-8, cause the processing circuitry to perform the method of any of examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (19) comprising processing circuitry (21) configured to:
receive an indication (23), for a vehicle (1) having, in order from front to rear of the vehicle (1), a first axle (3) with a first set (11) of wheels, a liftable second axle (5) with a second set (13) of wheels, a third axle (7) with a third set (15) of wheels, the third axle being a drive axle, and a liftable fourth axle (9) with a fourth set (17) of wheels, that a load (L) carried by the vehicle (1) is lower than a predefined first load (L₀) defining an unladen state of the vehicle (1);
receive an indication (25) that a capability to brake the vehicle (1) using the first set (11) of wheels is reduced;
acquire a stored predefined axle lift configuration (26) known to enable maximum deceleration of the vehicle (1) when the vehicle (1) is in the unladen state and the capability to brake the vehicle (1) using the first set (11) of wheels is reduced; and
provide, in response to the indication (23) that the load (L) carried by the vehicle (1) is lower than the predefined first load (L₀) and the indication (25) that the capability to brake the vehicle (1) using the first set (11) of wheels is reduced, an axle lift command (27) encoding the predefined axle lift configuration (26).

2. The computer system (19) of claim 1, wherein the processing circuitry (21) is configured to acquire the stored predefined axle lift configuration (26) in response to the indication (25) that the capability to brake the vehicle (1) using the first set (11) of wheels is reduced.

3. The computer system (19) of claim 1 or 2, wherein the processing circuitry (21) is further configured to disregard, in response to the indication (23) that the load (L) carried by the vehicle (1) is lower than the first load (L₀), any axle lift configuration request from a driver of the vehicle (1).

4. The computer system (19) of any of claims 1-3, wherein the indication (26) that the capability to brake the vehicle (1) using the first set (11) of wheels is reduced is an indication that a front braking sub-system (35) controllable to brake at least the first set (11) of wheels is faulty.

5. The computer system (19) of any of claims 1-4, wherein the processing circuitry (21) is further configured to:
receive an indication (23) that the load (L) carried by the vehicle (1) is lower than the first load (L₀); and
provide, in response to the indication (23) that the load (L) carried by the vehicle (1) is lower than the predefined first load (L₀) and in the absence of an indication that the capability to brake the vehicle (1) using the first set (11) of wheels is reduced, an axle lift command (27) encoding an axle lift configuration where the second axle (5) is lifted and the fourth axle (9) is lifted.

6. The computer system (19) of any of claims 1-5, wherein the processing circuitry (21) is further configured to:
receive an indication that the load (L) carried by the vehicle (1) is higher than the first load (L₀) and lower than a predefined second load (Lₘₐₓ);
receive an axle lift configuration request (28) from a driver of the vehicle (1); and
provide, in response to the indication that the load (L) carried by the vehicle (1) is higher than the first load (L₀) and lower than the predefined second load (Lₘₐₓ) and the axle lift configuration request (28) from the driver of the vehicle (1), an axle lift command encoding an axle lift configuration fulfilling the axle lift configuration request (28) from the driver of the vehicle.

7. The computer system (19) of any of claims 1-6, wherein the processing circuitry (21) is further configured to:
receive an indication that the load (L) carried by the vehicle is higher than the second load (Lₘₐₓ);
provide, in response to the indication that the load (L) carried by the vehicle is higher than the second load (Lₘₐₓ), an axle lift command encoding an axle lift configuration where the second axle (5) is unlifted and the fourth axle (9) is unlifted.

8. The computer system (19) of claim 7, wherein the processing circuitry (21) is further configured to disregard, in response to the indication that the load (L) carried by the vehicle (1) is higher than the second load (Lₘₐₓ), any axle lift configuration request (28) from a driver of the vehicle (1).

9. A lift axle arrangement (20) comprising:
the computer system (19) of any of claims 1-8;
a first axle lift actuator (31) coupled to the processing circuitry (21) of the computer system (19) to receive a control signal (32) for lifting the second axle (5); and
a second axle lift actuator (33) coupled to the processing circuitry (21) of the computer system (19) to receive a control signal (34) for lifting the fourth axle (9).

10. A vehicle (1), comprising:
in order from front to rear of the vehicle (1), a first axle (3) with a first set (11) of wheels, a liftable second axle (5) with a second set (13) of wheels, a third axle (7) with a third set (15) of wheels, the third axle (7) being a drive axle, and a liftable fourth axle (9) with a fourth set (17) of wheels; and
the lift axle arrangement (20) according to claim 9,
wherein the first axle lift actuator (31) of the lift axle arrangement (20) is coupled to the second axle (5) and the second axle lift actuator (33) of the lift axle arrangement (20) is coupled to the fourth axle (9).

11. A computer-implemented method, comprising:
receiving (S41) an indication (23), for a vehicle (1) having, in order from front to rear of the vehicle (1), a first axle (3) with a first set (11) of wheels, a liftable second axle (5) with a second set (13) of wheels, a third axle (7) with a third set (15) of wheels, the third axle being a drive axle, and a liftable fourth axle (9) with a fourth set (17) of wheels, that a load (L) carried by the vehicle (1) is lower than a predefined first load (L₀) defining an unladen state of the vehicle (1);
receiving (S42) an indication (25) that a capability to brake the vehicle (1) using the first set (11) of wheels is reduced;
acquiring (S43) a stored predefined axle lift configuration (26) known to enable maximum deceleration of the vehicle (1) when the vehicle (1) is in the unladen state and the capability to brake the vehicle (1) using the first set (11) of wheels is reduced; and
providing (S44), in response to the indication (23) that the load (L) carried by the vehicle (1) is lower than the predefined first load (L₀) and the indication (25) that the capability to brake the vehicle (1) using the first set (11) of wheels is reduced, an axle lift command (27) encoding the predefined axle lift configuration (26).

12. The method of claim 11, wherein the method comprises acquiring the stored predefined axle lift configuration (26) in response to the indication (25) that the capability to brake the vehicle (1) using the first set (11) of wheels is reduced.

13. The method of claim 11 or 12, wherein the method further comprises disregarding, in response to the indication (23) that the load (L) carried by the vehicle (1) is lower than the first load (L₀), any axle lift configuration request from a driver of the vehicle (1).

14. The method of any of claims 11-13, wherein the indication (26) that the capability to brake the vehicle (1) using the first set (11) of wheels is reduced is an indication that a front braking sub-system (35) controllable to brake at least the first set (11) of wheels is faulty.

15. A computer program product comprising program code for performing, when executed by the processing circuitry (21) comprised in the computer system (19) of any of claims 1-8, the method of any of claims 11-14.
